# EUROPEAN PATENT SPECIFICATION

(11) **EP 1 504 214 B1**
(45) Date of publication and mention of the grant of the patent: **06.08.2008**
(21) Application number: 03729951.8
(22) Date of filing: 30.04.2003
(51) Int. Cl.: F16L 59/20, F16L 58/18

(54) **METHOD FOR THE FIELD INSULATION OF CONNECTING JOINTS FOR FLUID TRANSPORT PIPELINES**
VERFAHREN ZUR FELDISOLIERUNG VON VERBINDUNGSANSCHLÜSSEN FÜR FLUIDTRANSPORTROHRE
PROCEDE D'ISOLATION DE CHAMP DE RACCORDS POUR DES CANALISATIONS DE TRANSPORT DE FLUIDES

(30) Priority: 08.05.2002 IT GE20020038
(43) Date of publication of application: 09.02.2005
(73) Proprietor: SOCOTHERM S.p.A., 36100 Vicenza (IT)
(72) Inventor: VARAGNOLO, Roberto, c/o Socotherm S.P.A., I-45011 Adria (IT); GUIDETTI, Gianpietro, c/o Socotherm S.P.A., I-45011 Adria (IT); ZANELLATO, Giogio, c/o Socotherm S.P.A., I-45011 Adria (IT); MAESTRELLO, Paolo, c/o Socotherm S.P.A., I-45011 Adria (IT)
(74) Representative: Porsia, Attilio
(86) International application number: PCT/EP2003/004494
(87) International publication number: WO 2003/095887

(56) References cited:
- WO-A-01/92776
- WO-A-89/11618
- WO-A-99/56055
- US-A- 3 744 823

## Description

This invention refers to a method for the field insulation of connecting joints for fluid transport pipelines, such as for instance gas pipelines, oil pipelines, water pipelines and others.

Such a method is known from document WO 89/11618.

In the construction of said pipelines, which are normally underground or underwater, general use is made of metallic tubes, which are externally insulated, depending on the various operating conditions, with various materials and in various insulating layers. The following combinations of insulating layers generally apply:
- Anticorrosive insulation based on bitumen, coal tar, thermosetting resins and thermoplastic resins;
- Anticorrosive insulation plus thermal insulation;
- Anticorrosive insulation plus thermal insulation plus weighting with concrete;
- Anticorrosive insulation plus weighting with concrete.

In all these cases, the extremities of the metallic tubes are at the time of their factory or yard insulation left uncovered (free of their relative insulation) for a certain length depending on their diameter and type of insulation, so as to make it possible to field weld the individual tube lengths to each other and to refit the various insulations applied on a factory or yard level.

Once the welding between the metallic tubes is completed, the various insulations need to be refitted so as to obtain the entire pipeline with the same performances of the original insulations, without occasioning weak spots along the same.

For the field refitting of the anticorrosive insulation on the joint the following are generally used:
- Cold-applied plastic sealing tapes;
- Textile fabric tapes impregnated with various protective and sealing materials such as bitumen, various resins, etc.;
- Thermosetting resins in powder or liquid form;
- Thermo-retractable plastic sleeves,
- Single and double-layered sheaths and ribbons co-extruded from PE (polyethylene)/PP (Polypropylene).

In particular, the refitting of the joint for the tubes insulated with 3-layered polyolefin (PE/PP) resins is carried out as follows:
1. For metallic tubes insulated with the method based on a triple layer of PE for operating temperatures of 70°C max.
   1.1 The typical realization of the insulation on the joint comprises the following operations:
      a) Sanding of the metallic surface for the entire length of the uncovered joint 7 tube;
      b) Heating of the sanded tube section, generally by electrical induction;
      c) Eventually applying an epoxy primer;
      d) Positioning on the joint of a thermally retractable PE sleeve composed of an external PE layer and an internal layer of mastic adhesive - of a length such as to overlap the insulation present on the bars by about 10 cm;
      e) Heating the sleeve with an LPG (liquefied petroleum gas) torch by hand, until it completely adapts to the underlying tube, while trying to chase out the trapped air bubbles by repeatedly heating and manually squeezing the sleeve surface with a roller to remove them.
   1.2 As an alternative to the sleeve, tapes made of plastic or coatings based on epoxy resins, PU (polyurethane) etc. are used;
2. For metallic tubes insulated by the method based on a triple PP layer for operating temperatures up to 130°C: for the insulation of the welding joints and of the damaged areas special polypropylene thermoplastic materials in the form of powders, sheaths, bands and tapes are used.
   2.1 The typical methodology followed for realizing the insulation of the joint comprises the following operations:
      a) Sanding of the metallic surface;
      b) Eventual "bevel-cutting" of the edge of the surrounding plastic insulation;
      c) Heating of the metallic surface, preferably by electric induction;
      d) Distributing the liquid or powdered primer over the metallic surface, using a brush, swab, electrostatic pistol, torch, and fluid bed nozzles eventually mounted on a circular mold and moved around the tube by hand;
      e) Positioning on the tube area to be insulated a dual-layered sheath or band (of an appropriate size and after heating the same) composed of co-extruded PP and adhesive, or of a sheath or band separated between PP and adhesive (as an alternative to the adhesive band, a powdered adhesive may be used);
      f) Using the sheath or band as an overlap or without overlapping the existing surrounding insulation (if without overlap, after completing the application of the sheath or band, filling it with PP or its adhesive copolymer by extrusion refits the empty area;
      g) The thickness of the co-extruded sheath or band is preferably the final one to be obtained, without having to resort to multiple layers;
      h) After positioning the sheath or band on the tube, fastening it to and pressing it on the tube in various ways by using a compacting roller, tightening it with appropriate belts, with a thermally retractable tape, with a compressed air operated tubular bracelet, with a metal bracelet made of one or several sections so as to adapt it and make it adhere to the support;
      i) Eventual further heating of the sheath or band, so as to ensure the complete melting of the adhesive and an adequate fusing of the PP;
      j) After completing the application of the sheath or band, cooling the same to the desired temperature.
   2.2 As an alternative to the sheath or band of a size suitable to insulate the area, a dual-layered PP and adhesive co-extruded tape of a thickness of preferably less than 1 mm may be used, by wrapping it around the tube in overlaps and in several layers, until the required thickness is obtained;
   2.3 As a further alternative, after applying the primer and adhesive the PP or powdered PP polymer may be applied by using a torch, up to the desired thickness and while overlapping the surrounding triple-layered PP insulation applied at the factory level.
   2.4 Another technique used, after applying the primer and eventually the adhesive, is that of mounting a ring or mold around the area to be insulated while overlapping the surrounding insulation, so as to create a hollow space equal to the thickness of the insulation to be obtained, and subsequently of filling the hollow space with the required thermoplastic material by using an injection press or an extruder;
   2.5 A further technique, after applying the primer, is that of mounting an appropriate thermo-retractable sleeve utilizing the same procedure used for the sleeve while refitting the joint of the PE-insulated tubes.
3. The refitting of the thermal insulation on the joint is carried out after re-establishing the anticorrosive later in various ways, such as:
   3.1 Applying expanded PU
      3.1.1 Applying a sheet metal mold on the joint, filling the hollow space with expanded PU and applying a thermo-retractable sleeve on the insulating material;
      3.1.2 Applying preformed pipe coverings made of insulating material on the joint and applying a thermo-retractable sleeve;
      3.1.3 Applying a sleeve or casing on the joint, made of a plastic material (PU, for example) with thermo-retractable collars at its extremities, and filling the hollow space with expanded PU.
   3.2 Applying compact resins
      3.2.1 Compact thermosetting resins of a syntactic or non-syntactic type are used, poured into an appropriate mold placed on the joint while also entrusting them with re-establishing the anticorrosive layer. This solution has the disadvantage of yielding an insulation with a poor insulating power (the λ-value is in the high figures comprised between 0.19 W/m°C and 0.24 W/m°C, compared to an expanded PU with a λ-value of 0.023-0.029 W/m°C) and of requiring a high volume of material, thus leading to high costs per joint. Moreover, the heavy thickness of the poured resin, which may attain 100-120 mm, and the resulting heat generated in the polymerisation reaction induce a considerable heating of the entire mass, which takes time to cool off and harden, thus delaying the launching.
         In the particular case of steel tubes insulated with various layers of a heavy thickness up to 100 mm of PP/PE polyolefin resins both for corrosion protection and for thermal insulation, the refitting of the joint with thermosetting resins (PU, for example) involves, as mentioned above, a critical adhesion of the resin to the surfaces of the polyolefin material, with the possibility or risk of water entering the joint and consequently corroding the steel.
   3.3 The refitting of the joint of the tubes insulated with PE/PP polyolefin resins can also be done by a high pressure injection, in an appropriate mold placed on the joint, of PE/PP in a melted condition, but in this case the waiting time for the cooling of the mass to enable launching also becomes very long.
4. The refitting of the weighting of the joint is generally carried out as follows:
   a) Applying a sheet metal mold on the joint, and filling the hollow space with:
      - A molten agglomerate of asphalt and inert materials;
      - Quick setting concrete;
      - Compact thermosetting resins, filled or not.

It can easily be deducted from the above description that the refitting of the insulations on the pipeline welding joint can be long, elaborate, critical and costly, especially if said pipelines are to be laid into the sea, where in addition to the full performance reliability demanded from the insulations, the time required for completing a joint, due to the high cost of the launching ship, carries enormous weight.

The purpose of this invention is therefore to obviate the shortcomings of the known refitting techniques of the insulations formerly mentioned, by overcoming all the critical aspects of said techniques and essentially implementing the field restoration of the required insulations of the joints. (anticorrosive, thermal, and weighting) in a single and rapid operation. These refittings may concern the anticorrosive insulation layers and/or the thermal insulation layers and/or the weighting layers.

This purpose is obtained by this invention by a method of field insulating the connecting joints for fluid transport pipelines, whereby said pipelines are each composed of a metallic tube partially insulated with at least one layer of anticorrosive material and connected to each other by a welding joint for the final extremities free of any insulation of said metallic tubes, comprising the following phases:
- Positioning an essentially cylindrical and appropriately shaped mold around the extremities, next to the joint, of said anticorrosive insulations and around the final insulation-free extremities of said metallic tubes, so as to create a hollow space between said extremities and said mold's internal wall;
- Pouring a sealing resin into said mold, capable of filling said hollow space and to quickly solidify, while effectively adhering to the extremities of said anticorrosive insulation layers and of said metallic tubes;
- Removing said cylindrical mold after the solidification of said resin.
- fastening of half coverings or preformed molds of thermally insulating material in the interior of said mold prior to the positioning of the mold.

Further scopes and advantages of this invention will be better understood in the course of the following description of a few forms of embodiment of this method, considered for exemplifying and nonlimiting purposes and referred to the attached drawings, in which:
- Fig. 1 illustrates a partial laterally raised and longitudinally sectioned view of two pipelines insulated with a layer of anticorrosive material, a layer of thermal insulation, a layer- of weighting material and connected by a welding joint;
- Fig. 2 illustrates a partial laterally raised and longitudinally sectioned view of the pipelines of Fig. 1, on which a mold carrying two half pipe coverings of thermally insulating material and two half pipe coverings of weighting material are placed next to the joint and in accordance with a first phase of this method;
- Fig. 3 illustrates a partial laterally raised and longitudinally sectioned view of the pipelines of Fig. 2, on which a fluid cementing and sealing resin is placed next to the connecting joint, in accordance with a second phase of this method;
- Fig. 4 illustrates a partial laterally raised and transversally sectioned view along the line IV-IV of Fig. 3;
- Fig. 5 illustrates a partial laterally raised and longitudinally sectioned view of the pipelines of Fig. 3 after solidification of the resin and removal of the mold, in accordance with a further phase of this method;
- Fig. 6 illustrates a partially laterally raised and longitudinally sectioned view of two pipelines insulated with a layer of anticorrosive material and a layer of weighting material and connected by a welding joint on which a mold is placed which carries only two half pipe coverings of weighting material in accordance with a first variant of this method;
- Fig. 7 illustrates a partial laterally raised and longitudinally sectioned view of two pipelines insulated with a layer of anticorrosive material, a layer of insulating material 301 and 302 and a layer of impermeable insulation 401 and 402 and connected by a welding joint on which a mold is placed which carries only two half pipe coverings of thermal insulating material in accordance with a second variant of this method;
- Fig. 8 illustrates a partial laterally raised and longitudinally sectioned view of two pipelines insulated with a layer of anticorrosive material and connected by a welding joint on which a mold for the pouring of a resin is placed, in accordance with a further variant of this method.

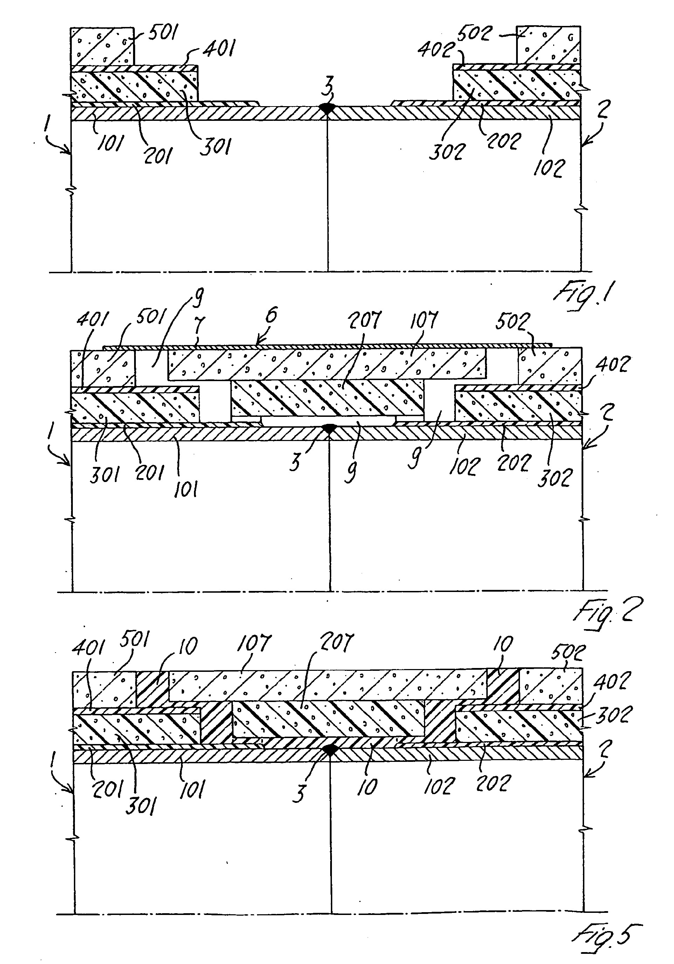

With reference to the attached drawings and in particular with Fig. 1 of the same, 1 and 2 indicate two pipelines for the transport of a fluid such as water, gas, oil or other, each comprising, from the inside toward the outside: a metallic tube 101 and 102, a layer 201 and 202 of anticorrosive insulation, a layer 301 and 302 of insulation with a thermally insulating material, a layer 401 and 402 of impermeable mechanically protective insulation and a final layer 501 and 502 of a weighting material. The metallic tubes 101 and 102 are connected by a welding joint 3, and as can be observed, the extremities of the layers 201, 202 of anticorrosive insulation and the extremities of the layers 401, 402 of mechanical protection next to the extremities of said metallic tubes 101 and 102 are, as already known, left uncovered during the yard implementation for the subsequent field insulation or refitting.

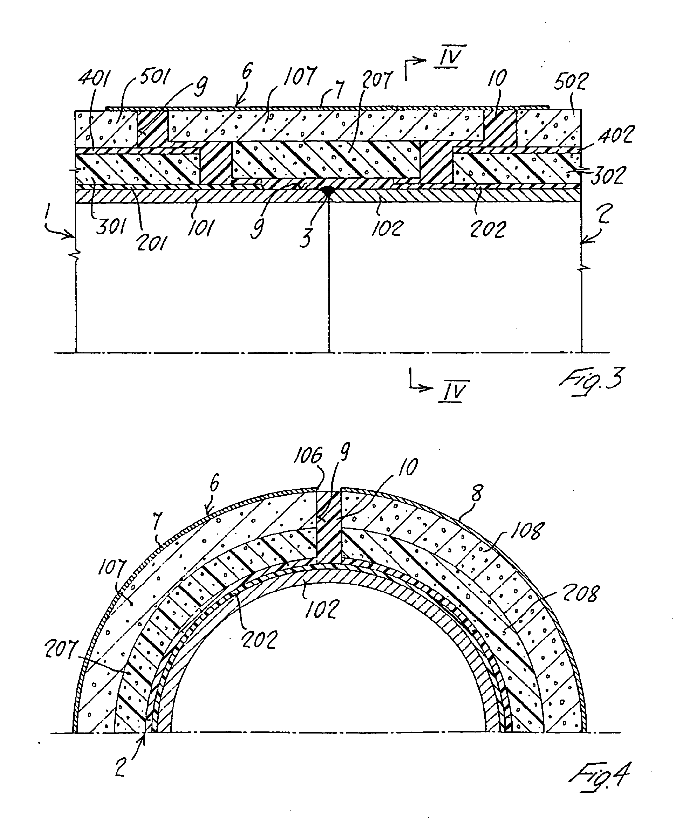

Fig. 2 illustrates the two pipelines 1 and 2 of Fig. 1, on which in accordance with a first phase of this method a preferably metallic mold 6 is positioned, formed of two cylindrical half shells 7 and 8 as seen in Fig. 4, to each of which a half covering 107 and 108 of a weighting agglomerate (the materials used for this agglomerate will be described in the following) is fastened. Each of these half coverings 107 and 108 of high specific weight carries in its interior a half covering 207 and 208 of thermally insulating material. These half coverings 107, 108 and 207, 208 are placed, together with the mold 6 resting on the outermost layers 501 and 502 of the pipelines 1 and 2, around the connecting joint 3 of the metallic tubes 101 and 102 and around the uncovered extremities of the insulation layers 201, 202 and 401, 402. The form and the dimensions of said half coverings 107, 108 and 207, 208 are such as to leave an empty separating space 9 between them and said uncovered extremities.

After completing the positioning of the mold 6 with the relative half coverings 107, 207 and 108, 208, a thermosetting resin 10 is poured into said hollow space 9 through an appropriate pouring hole 106 made in said mold 6, until said hollow space 9 is totally filled. Within a few minutes, the resin 10 solidifies (in various ways, depending on the type of resins used, as will be described later), while perfectly adhering to all the uncovered surfaces coming in contact with the same, encapsulating both the extremities of the metallic tubes 101, 102 next to the joint 3 as well as the extremities of the insulating layers 201, 202 and 401, 402, and forming a single cemented and sealed block with said extremities. After the resin 10 has solidified, the removal of the mold 10 may proceed, thus obtaining the final configuration of the pipelines 1 and 2 shown in Fig. 1. For this purpose the internal surfaces of the half shells 7 and 8 constituting the mold 6 are preferably coated with a non-adhering material, for instance Teflon.

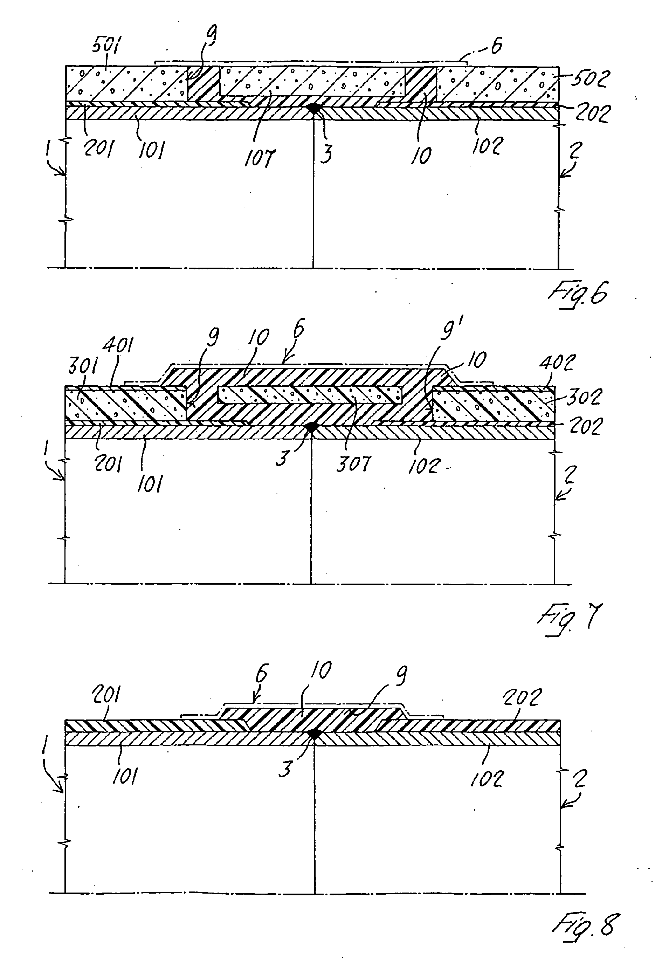

The insertion of the half coverings 107-108 and 207-208 in the mold fulfils the following purposes of this invention:
- It considerably reduces the volume of poured resin and therefore the cost of refitting the joint;
- It reduces the thickness of the hollow space to be filled and therefore the exothermic reaction and the temperature reached by the mass, so that the launching may proceed after a few minutes,
- It optimally restores the thermally insulating properties and the negative buoyancy of the pipeline. Fig. 6 illustrates a first variant of this method, referred to the case in which two pipelines 1 and 2 connected by the welding joint 3 comprise the two metallic tubes 101 and 102, the respective anticorrosive layers 201 and 202 and the respective weighting agglomerate layers 501 and 502, but lacks the thermally insulating layer and the mechanical protection layer described in the previous figures. In this case the mold 6, while still composed of the two cylindrical half shells 7, 8 and fitted with the pouring hole 106, internally carries only the half coverings 107 and 108 (not visible in the figure) made of a high specific weight agglomerate and sized so as to leave the hollow space 9. Also in this case, after positioning the mold as shown in the figure, a thermosetting resin 10 is poured which solidifies in a few minutes and cements the added half coverings 107, 108 with the surfaces facing them, meaning the uncovered extremities of the tubes 101, 102 of the anticorrosive layers 201, 202 and the lateral walls of the weighting layers 501, 502.

Fig. 7 illustrates a second variant of this method, referred to the case in which the two pipelines 1 and 2 connected by the welding joint 3 comprise the two metallic tubes 101 and 102, the respective anticorrosive layers 201 and 202 and the respective thermally insulating layers 301 and 302 with the mechanical protection layers 401 and 402, but lacks the weighting layer described in Fig. 1. In this variant the mold 6 is shaped so as to present a certain lateral projection with respect to the outer longitudinal surfaces of the pipelines, represented by the layers 301 and 302 of thermally insulating material. This mold 6 carries two half coverings 307 and 308 (not visible in the figure) of insulating material, and thanks to the lateral projection of the same a double hollow space 9' is created between the joint 3 connecting the metallic tubes 101, 102 and the internal surface of the half coverings 307, 308, and between the outer surface of said half coverings and the internal surface of the metallic mold 6. In this manner, the layer obtained during the pouring phase of the resin 10 also encapsulates the half coverings 307, 308 fastened to the mold 6, in addition to adhering to the two uncovered extremities of the mechanical protection layers 401, 402, of the thermally insulating layers 301, 302, of the respective anticorrosive layers 201 and 202 and of the metallic tubes 101 and 102.

Fig. 8 illustrates a last variant of this method, referred to the case in which the two pipelines connected by the welding joint 3 comprise the two metallic tubes 101 and 102 and the respective anticorrosive layers 201 and 202, but lack the layers of thermal insulation material with the layers of mechanical protection material, and the weighting layers described in Fig. 1. Also in this case the mold 6 is fitted with a certain lateral projection and the pouring hole (not visible in the figure), but it lacks the half coverings. This mold 6 is placed on the uncovered extremities of the metallic tubes 101 and 102 of the pipelines 1 and 2, and the thermosetting resin 10 is poured inside the hollow space 9 formed between its internal surface and the external surface of said uncovered extremities.

In all the variants described above, the preferably metallic mold may be constructed so as to realize, after the assembly around the joint, a sleeve to be left in place so as to enable it to help distribute the stresses induced on the joint and on its insulation by passing over the rollers, and by the temporary curvature assumed by the tube during the launching.

As regards these resins, which are used in all phases of the method and independently of the executive variants of the same, there may be a use of polyurethane thermosetting resins, of polymeric resins, of epoxy resins, of polyester resins, of polyamide resins, and of polycyclopentadienic resins; of resins modified with bitumen or coal tar; of thermoplastic resins modified with bitumen or not, provided with fillers or not, additives or not, and adhesive aids or not.

As regards the half coverings 107, 108 made of a high specific weight agglomerate, this method preferably utilizes concrete obtained with any kind of cement, armed or not, reinforced or not with metallic nets, metallic fibers, glass fibers, plastic fibers or others. Moreover, said half coverings may eventually be provided with hooks or mutually coupling systems, once the mold on which they are fastened has been positioned on the pipelines.

The half coverings 207-208 and 307-308 made of thermally insulating material may be composed of: expanded thermosetting resins such as polyurethane, polyisocyanurate, polyurea, polyester or other; of syntactic foams such as polyester, epoxy, polyurethane foams or others; of expanded thermoplastic resins such as polystyrene, polyethylene (PE), polypropylene (PP), PVC resins or others; of organic material such as glass wool, calcium silicate, cellular glass or others; and of microporous insulating materials. Such half coverings or preformed thermally insulating molds may also be composed of open cell insulating materials, materials in powdered, laminar, or granular form introduced in appropriate tightly sealed containers, which are in turn composed of impermeable materials: Such containers may be placed under vacuum up to a value of about 0.1 millibar to enhance their insulating capacity.

In the case of metallic tubes insulated with PE/PP polyolefin resins, the following situations may occur:
a) A 3-layer type anticorrosive insulation composed of an adhesive epoxy primer or topcoat for total thickness of 2-8 mm,
b) An anticorrosive and thermal insulation composed of an epoxy primer layer, an adhesive layer and a compact PE/PP layer up to thickness of 60-80 mm,
c) An anticorrosive and thermal insulation composed of an epoxy primer layer, an adhesive layer (plus eventually 1-2 mm of a compact PE/PP layer), an expanded PE/PP layer up to thickness of 100 mm, and a compact PE/PP layer of 3-6 mm.
d) An anticorrosive and thermal insulation composed of an epoxy primer layer, an adhesive layer (plus eventually 1-2 mm of a compact PE/PP layer), and a syntactic PE/PP layer up to a thickness of 100 mm.

A further scope and advantage of this invention is that of achieving an enhanced adhesion of the poured resin 10 to all the surfaces of polyolefin material facing it in the situations described above, by using an adequate treatment of the surfaces in question.

This treatment comprises: mechanical abrasion of said surfaces; application of an appropriate primer on said surfaces; treatment of said surfaces with a corona effect; and treatment of said surfaces by flashing. Said treatment is preferably carried out in the yard, and therefore outside the launching line.

Another type of operation for tubes insulated with polyolefin resins, which may eventually be carried out but preferably on a factory level, outside the launching line and at the time of insulating the tube in the factory in order to further enhance the adhesion of the resin 10, is the application on the surface of the anticorrosive insulation, and on the surfaces of the polyolefin material eventually applied as a thermal insulation, next to the cut-back and for the desired extension, of a first layer of an appropriately clinched PE or PP copolymer, and of a second layer of an epoxy, polyurethane, polyurea or other resin, so as to create on said first copolymer layer a polar resin layer capable of further enhancing the adhesion with the resin 10 utilized for filling the hollow spaces 9. This application of a first copolymer layer on the anticorrosive layer is preferably carried out with a material in the form of a film or sheath, while inducing a fusion of the two surfaces to be welded by using infrared rays, hot air, heating belts or other, or with powdered materials by using a torch or a material dissolved in an appropriate solvent. The application of the second resin layer on the clinched copolymer brought to the fusion point may on the other hand be carried out with powdered, liquid or pasty material. Alternatively, by extruding the clinched copolymer and simultaneously distributing the resin over the extruded band or by co-extruding the graft polymer and the resin, the film or sheath of PE or PP copolymer may be obtained in a form already coupled with the resin.

### Example 1

Restoration of the insulation of the welding joint of tubes of a diameter of 32" and thickness of 30.2 mm insulated with 6 mm of a triple PP layer plus 100 mm of concrete; uncovered part without concrete insulation of 700 mm.

Materials used: compact dual-component polyurethane resin - half coverings of concrete of 90 mm thickness.

### Procedure

A first layer of adhesive PP copolymer and a second layer of epoxy resin were applied on the surfaces of the anticorrosive PP insulation adjacent to the cutback and for an extension of 150 mm. The application of the first adhesive copolymer layer was coupled to the PP layer by fusing the two surfaces while heating them with infrared rays.

The application of the second epoxy resin layer was carried out by depositing liquid epoxy resin and reticulating it on the outer surface of the adhesive copolymer brought to the fusion point by heating it with infrared rays.

The uncovered metallic part of the joint was sanded with metallic grit to a grade SA 2-1/2, after first adequately drying and heating.

The sheet metal mold with the concrete half coverings fastened inside it was placed around the joint while overlapping the concrete applied in the factory with an interposed sealing gasket. Through an appropriate hole in the mold, the polyurethane resin was poured into the hollow spaces until totally filling them, while using an appropriate machine for the mixing of the PU components. The adhesion of the PU resin to the surface of the PP insulation turned out to be ≥ 80 kg/cm², much superior to that obtainable on untreated surfaces.

### Example 2

Restoration of the insulation of the welding joint of tubes of 22" diameter and 22 mm thickness, insulated with 42 mm of four-layered expanded PP, uncovered part with PP insulation of 300 mm. Materials used: compact dual-component polyurethane resin, half coverings of expanded PP of 40 mm thickness.

### Procedure:

All the surfaces of PP material adjacent to the joint, including the outer surfaces of the insulation for an extension of 100 mm were treated as in Example 1.

### Procedure:

The uncovered metallic part of the joint was sanded with metallic grit to a grade SA 2-1/2, after first adequately drying and heating.

The sheet metal mold with the half coverings of expanded PP fastened inside it was placed around the joint while overlapping the PP applied in the factory with an interposed sealing gasket. Through an appropriate hole in the mold the PU resin was poured into the- hollow spaces until totally filling them, while using an appropriate machine for the mixing of the PU components.

The adhesion of the PU resin to the surfaces of the PP insulation turned out to be ≥ 80 kg/cm², much superior to that obtainable on an untreated surface. As could be verified from the foregoing description, the advantages ensuing from the usage of a field insulating method of connecting joints for fluid transport pipelines in accordance with the embodiments reported for exemplifying purposes are manifold, and manifold are the further embodiment variants which may be adopted for obtaining said advantages, without abandoning the range of the attached claims.

## Claims

1. Method for the field insulation of connecting joints (3) for fluid transport pipelines (1,2), where said pipelines (1, 2) are each composed of a metallic tube (101, 102) partially insulated with at least one layer (201, 202) of anticorrosive material and connected with each other by a welding joint (3) for the final extremities lacking the insulations of said metallic tubes (101, 102), comprising the following phases:
- Positioning of an essentially cylindrical mold (6) appropriately shaped around the extremities next to the joint (3) of said layers (201, 202) of anticorrosive insulation and around the extremities lacking the insulations of said metallic tubes (101, 102) so as to obtain a hollow space (9, 9') between said extremities and the internal wall of said mold (6);
- Pouring into said mold (6) of a sealing resin (10) capable of filling said hollow space (9, 9') and to rapidly solidify while effectively adhering to the extremities of said layers (201, 202) of anticorrosive insulation and to said metallic tubes (101, 102);
- Removing said cylindrical mold (6) after the solidification of said resin (10);
**characterized in that it comprises**, before said positioning phase, a phase of fastening in the interior of said mold (6) of half coverings or preformed molds (307, 308) of thermally insulating material, where each layer (201, 202) of anticorrosive insulation of each pipeline (1, 2) is partially insulated with at least one layer (301, 302) of thermally insulating material with a relative impermeable layer (401, 402) for mechanical protection.

2. Method for insulation according to claim 1, **characterized in that** said mold (6) comprises at least one pouring hole (106) and is composed of two preferably metallic half shells (7,8) internally insulated with a non-adherent material, such as Teflon or other.

3. Method for insulation according to the claims 1 and 2, **characterized in that** said preferably metallic mold (6) is constructed so as to realize, after assembling around the joint (3), a sleeve to be left in place after the pouring of the resin (10).

4. Method for insulation according to claim 1, **characterized in that** in the positioning phase of the mold (6) said half-coverings (307, 308) of thermally insulating material are surrounded by a hollow space (9') and in the subsequent pouring phase are encapsulated by the resin (10) poured into said hollow space (9').

5. Method for insulation according to claim 1, further comprising a phase of fastening half coverings (107, 108) of a high specific weight agglomerate inside said mold (6), where each layer (201, 202) of anticorrosive insulation of each pipeline (1, 2) is partially insulated by at least one layer (501, 502) of weighting agglomerate.

6. Method for insulation according to claim 5, **characterized in that** a half covering (207, 208) of thermally insulating material is fastened to each of said half coverings (107, 108) of high specific weight agglomerate, where each layer (201, 202) of anticorrosive insulation of each pipeline (1, 2) is partially insulated by at least one layer (301, 302) of thermally insulating material provided with a relative impermeable layer (401, 402) of mechanical protection partially insulated with at least one layer (501, 502) of weighting agglomerate.

7. Method for insulation according to claim 5, **characterized in that** said half coverings (107, 108) of high specific weight agglomerate are made of concrete derived from any type of cement or inert material, in case armed or reinforced.

8. Method for insulation according to claim 1, **characterized in that** said half coverings (107, 108) of high specific weight agglomerate comprise hooking up and coupling devices between them, where said devices are capable of keeping said half coverings (107, 108) in place after the positioning phase of the mold (6).

9. Method for insulation according to claim 6, **characterized in that** said half coverings (307, 308, 207, 208) of thermally insulating material are composed of expanded thermosetting resins, such as polyurethane, polyisocyanate, polyurea, polyester or the like.

10. Method for insulation according to claim 6, **characterized in that** said half coverings (307, 308, 207, 208) of thermally insulating material are composed of expanded thermoplastic resins, such as polystyrene, polyethylene, polypropylene, PVC and the like.

11. Method for insulation according to claims 6, **characterized in that** said half coverings (307, 308, 207, 208) of thermally insulating material are composed of inorganic material such as glass wool, calcium silicate, cellular glass or other.

12. Method for insulation according to claim 6, **characterized in that** said half coverings (307, 308, 207, 208) of thermally insulating material are composed of open cell expanded insulating materials, in sheets, granules and in powder form introduced in appropriate containers fitted with a tight seal and placed under vacuum.

13. Method for insulation according to claim 1, **characterized in that** said sealing resin (10) for filling the hollow- space (9, 9') is chosen among thermosetting resins such as: polyurethane resins, polyurea resins, epoxy resins, polyester resins, polyamide resins, polycyclopentadienic resins or the like; resins modified with bitumen, coal tar, or other; thermoplastic resins in case modified with bitumen, in case provided with fillers and in case provided with additives with adhesion promoters or other.

14. Method for insulation according to claim 1, **characterized in that** it comprises, prior to said first phase of positioning and in the case of pipelines (1, 2) insulated with polyolefin resins, the following phases of treating the surfaces of the layers (201, 202) of anticorrosive material and the surfaces (301- 302, 401-402) of the polyolefin material in case applied as thermally insulating material; mechanical abrasion of said surfaces; application of an appropriate primer on said surfaces; treating said surfaces with a corona effect; and treating said surfaces by flashing.

15. Method for insulation according to claim 6, **characterized in that** it comprises, prior to said first phase of Positioning and in the case of pipelines (1, 2) insulated with polyolefin resins, the application on the surfaces of the layers (201, 202) of an anticorrosive material and on the surfaces (301-302, 401-402) of the polyolefin material eventually applied as thermally insulating material, for the extension desired, of a first layer of appropriately clinched polyethylene or polypropylene copolymer, and of a second layer of epoxy resin, polyurethane resin, polyurea resin or others, capable of creating a polar resin surface on said first copolymer layer.

16. Method for insulation according to claim 15, **characterized in that** said first copolymer layer presents itself in the form of a film or sheath and is brought to the fusion point, together with the surface of the layer (201, 202) of anticorrosive material on which an anticorrosive material is applied, and the surfaces (301-302, 401-402) of the polyolefin material in case applied as a thermally insulating material, by using infrared rays, hot air, heating belts or other, or in the form of a powdered material by a torch or in the form of a viscous liquid.

17. Method for insulation according to claim 15, **characterized in that** said application of the second resin layer on the clinched copolymer brought to the fusion point is carried out with material in powdered, liquid or pasty form.

18. Method for insulation according to claim 15, **characterized in that** a film or sheath of copolymer already coupled with the resin is applied on said layer (201, 202) of anticorrosive material and on the surfaces (301-302, 401-402) by using appropriate graft polymer extruding operations and distributing the resin on the extruded material thus obtained, or on the co-extruded material of said graft polymer and of said resin.

## Patentansprüche

1. Verfahren zur Baustellenisolierung von Verbindungsstellen (3) flüssigkeitsführender Rohre (1, 2), wobei die Rohre (1, 2) jeweils von einer metallischen Röhre (101, 102) gebildet werden, die teilweise mit mindestens einer Schicht (201, 202) aus Rostschutzmaterial isoliert sind, und die miteinander über eine Schweißverbindung (3) der die Isolierung der metallischen Röhren (101, 102) nicht aufweisenden Enden verbunden sind, umfassend die folgenden Schritte:
- Ausrichten einer im Wesentlichen zylindrischen Gussform (6), die geeignet um die Enden der Schichten (201, 202) aus Rostschutzisolation und um die die Isolierung der metallischen Röhren (101, 102) nicht aufweisenden Enden nahe der Verbindung (3) herum geformt ist, um einen Hohlraum (9, 9') zwischen den Enden und der inneren Wand der Gussform (6) zu erhalten;
- Gießen eines Dichtharzes (10) in die Gussform (6), welches geeignet ist, den Hohlraum (9, 9') zu füllen und rasch zu erstarren, wobei es wirksam an den Enden der Schichten (201, 202) der Rostschutzisolation und der metallischen Röhren (101, 102) anhaftet;
- Entfernen der zylindrischen Gussform (6) nachdem das Harz (10) erstarrt ist;
**dadurch gekennzeichnet,**
**dass** es vor der Positionierungsphase eine Befestigungsphase aufweist, in welcher Halbabdeckungen oder vorgeformte Gussformen (307, 308) aus wärmedämmendem Material im Inneren der Gussform (6) befestigt werden, wobei jede Schicht (201, 202) aus Rostschutzisolation jedes Rohres (1, 2) teilweise mit mindestens einer Schicht (301, 302) aus wärmedämmendem Material und zum mechanischen Schutz mit einer relativ undurchlässigen Schicht (401, 402) isoliert wird.

2. Isolierverfahren gemäß Anspruch 1, **dadurch gekennzeichnet, dass** die Gussform (6) mindestens eine Abgussöffnung (106) aufweist und aus zwei vorzugsweise metallischen Halbschalen (7, 8) zusammengesetzt ist, die innseitig mit einem nichthaftenden Material isoliert sind, beispielsweise Teflon oder ähnlichem.

3. Isolierverfahren gemäß den Ansprüchen 1 und 2, **dadurch gekennzeichnet, dass** die vorzugsweise metallische Gussform (6) derart konstruiert ist, dass es möglich ist, nach der Anordnung um die Verbindung (3) eine Hülse an ihrem Ort zu belassen, nachdem das Harz (10) gegossen wurde.

4. Isolierverfahren gemäß Anspruch 1, **dadurch gekennzeichnet, dass** während der Ausrichtphase der Gussform (6) die Halbabdeckungen (307, 308) aus wärmedämmendem Material von einem Hohlraum (9') umgeben sind und dass diese in der anschließenden Gussphase von dem in den Hohlraum (9') hineingegossenen Harz umschlossen werden.

5. Isolierverfahren gemäß Anspruch 1, das weiterhin eine Phase aufweist, in welcher Halbabdeckungen (107, 108) aus einem ein hohes spezifisches Gewicht aufweisenden Agglomerat innerhalb der Gussform (6) befestigt werden, wobei jede Schicht (201, 202) aus Rostschutzisolation jedes Rohres (1, 2) teilweise von wenigstens einer Schicht (501, 502) eines gewichtigen Agglomerats isoliert wird.

6. Isolierverfahren gemäß Anspruch 5, **dadurch gekennzeichnet, dass** eine Halbabdeckung (207, 208) aus wärmedämmendem Material mit jeder der Halbabdeckungen (107, 108) aus einem hohes spezifisches Gewicht aufweisenden Agglomerat verbunden wird, wobei jede Schicht (201, 202) aus Rostschutzisolation jedes Rohres (1, 2) teilweise mit wenigstens einer Schicht (301, 302) aus wärmedämmendem Material gedämmt ist, welche mit einer relativ undurchlässigen mechanischen Schutzschicht (401, 402) isoliert ist, die teilweise mit einer Schicht (501, 502) gewichtigen Agglomerats gedämmt ist.

7. Isolierverfahren gemäß Anspruch 5, **dadurch gekennzeichnet, dass** die Halbabdeckungen (107, 108) aus einem ein hohes spezifisches Gewicht aufweisenden Agglomerat aus Beton bestehen, erhalten von allen denkbaren Typen von Zement oder inerten Materialien, gegebenenfalls armiert oder verstärkt.

8. Isolierverfahren gemäß Anspruch 1, **dadurch gekennzeichnet, dass** die aus einem ein hohes spezifisches Gewicht aufweisenden Agglomerat bestehenden Halbabdeckungen (107, 108) zwischen sich Aufhängungs- und Kopplungs-einrichtungen aufweisen, wobei die Einrichtungen dazu geeignet sind, die Halbabdekkungen (107, 108) im Anschluss an die Ausrichtphase der Gussform (6) in Position zu halten.

9. Isolierverfahren gemäß Anspruch 6, **dadurch gekennzeichnet, dass** die Halbabdeckungen (307, 308, 207, 208) aus wärmedämmendem Material aus geschäumten duroplastischen Harzen wie Polyurethan, Polyisocyanat, Polyharnstoff, Polyester oder ähnlichen zusammengesetzt sind.

10. Isolierverfahren gemäß Anspruch 6, **dadurch gekennzeichnet, dass** die Halbabdeckungen (307, 308, 207, 208) aus wärmedämmendem Material aus geschäumten thermoplastischen Harzen, wie Polystyren, Polyethylen, Polypropylen, PVC und ähnlichen zusammengesetzt sind.

11. Isolierverfahren gemäß Anspruch 6, **dadurch gekennzeichnet, dass** die Halbabdeckungen (307, 308, 207, 208) aus wärmedämmendem Material aus anorganischen Materialien wie Glaswolle, Kalziumsilikat, Schaumglas und ähnlichen zusammengesetzt sind.

12. Isolierverfahren gemäß Anspruch 6, **dadurch gekennzeichnet, dass** die Halbschalen (307, 308, 207, 208) aus wärmedämmendem Material aus offenporigen, geschäumten Dämmmaterialien in Platten-, Granulat- oder Pulverform bestehen, das in geeigneten Behältern eingeführt wird und mit einer unter Vakuum angebrachten Abdichtung versehen ist.

13. Isolierverfahren gemäß Anspruch 1, **dadurch gekennzeichnet, dass** das Dichtharz (10) zum Auffüllen des Hohlraums (9, 9') aus duroplastischen Harzen wie: Polyurethanharz, Polyharnstoff, Epoxyharz, Polyesterharz, Polyamidharz, Polycyclopentadienharz oder ähnlichen; Harzen modifiziert mit Bitumen, Steinkohlenteer, oder anderen; thermoplastischen Harzen gegebenenfalls modifiziert mit Bitumen, gegebenenfalls versehen mit Füllstoffen und gegebenenfalls versehen mit Additiven mit Adhäsionsvermittlern oder ähnlichen.

14. Isolierverfahren gemäß Anspruch 1, **dadurch gekennzeichnet, dass** es vor der ersten Phase des Ausrichtens und im Falle von Rohren (1, 2), die mit Polyolefinharzen isoliert werden, die folgenden Schritte der Oberflächenbehandlung der Schichten (201, 202) aus Rostschutzmaterial und der Oberflächen (301-302, 401-402) aus dem polyolefinen, gegebenenfalls als wärmedämmendes Material aufgebrachten Material aufweisen: Mechanische Abrasion der Oberflächen; Aufbringen eines geeigneten Haftvermittlers auf die Oberflächen; Korona-Behandlung der Oberflächen; und Behandlung der Oberflächen durch Flashen.

15. Isolierverfahren gemäß Anspruch 6, **dadurch gekennzeichnet, dass** es vor der ersten Phase des Ausrichtens und im Falle von Rohren (1, 2), die mit Polyolefinharzen isoliert sind, für die gewünschte Ausdehnung die Aufbringung einer ersten Schicht geeignet angehefteten Polyethylene- oder Polypropylencopolymers und einer zweiten Schicht Epoxidharzes, Polyurethanharzes, Polyharnstoffes oder anderen, die geeignet sind, eine polare Harzfläche auf der ersten Copolymerschicht zu erzeugen, auf den Oberflächen der Schichten (201, 202) aus Rostschutzmaterial und auf den Oberflächen (301-302, 401-402) aus polyolefinem Material, gegebenenfalls aufgebracht als wärmedämmendes Material, umfasst.

16. Isolierverfahren gemäß Anspruch 15, **dadurch gekennzeichnet, dass** die erste Copolymerschicht in Form eines Films oder einer Hülse ausgebildet ist und gemeinsam mit der Oberfläche der Schicht (201, 202) aus Rostschutzmaterial, auf welcher ein Rostschutzmaterial aufgebracht wird, und den Oberflächen (301-302, 401-402) aus polyolefinen Material, die gegebenenfalls als wärmedämmendes Material aufgebracht werden, durch Infrarotstrahlung, Heißluft, Heizgürtel oder ähnliches, oder in Form von Pulvermaterial oder in Form einer viskosen Flüssigkeit mittels einer Lötlampe auf einen Schmelzpunkt gebracht wird.

17. Isolierverfahren gemäß Anspruch 15, **dadurch gekennzeichnet, dass** die Aufbringung der zweiten Harzschicht auf dem anheftenden Copolymer, welches auf den Schmelzpunkt gebracht wird, durch Material in pulverförmiger, flüssiger oder pastöser Form erfolgt.

18. Isolierverfahren gemäß Anspruch 15, **dadurch gekennzeichnet, dass** ein Film oder eine Hülse aus Copolymer, die bereits mit dem Harz verbunden ist, auf die Schicht (201, 202) Rostschutzmaterials und auf die Oberflächen (301-302, 401-402), mittels geeigneter Pfropfpolymerextrusionsvorgänge und einer Verteilung des Harzes auf dem auf diese Weise extrudierten Material oder auf dem coextrudierten Material des Pfropfpolymers und des Harzes, aufgebracht wird.

## Revendications

1. Procédé d'isolation de champ de raccords ( 3 ) de canalisations ( 1, 2 ) de transport de fluide, dans lequel les canalisations ( 1, 2 ) sont composées chacune d'un tube ( 101, 102 ) métallique isolé partiellement par au moins une couche ( 201, 202 ) d'un matériau anticorrosif et sont reliées l'une à l'autre par un joint ( 3 ) de soudage pour les extrémités finales n'ayant pas les isolations des tubes ( 101, 102 ) métalliques, comprenant les stades suivants :
- on met en position un moule ( 6 ) sensiblement cylindrique, conformé de manière appropriée autour des extrémités proches du joint ( 3 ) des couches ( 201, 202 ) d'isolation anticorrosive et autour des extrémités n'ayant pas les isolations des tubes ( 101, 1025 ) métalliques, de manière à obtenir un espace ( 9, 9' ) creux entre lesdites extrémités et la paroi intérieure du moule ( 6 ),
- on coule dans le moule ( 6 ) une résine ( 10 ) de scellement, capable de remplir l'espace ( 9, 9' ) creux et de se solidifier rapidement tout en adhérant efficacement aux extrémités des couches ( 201, 202 ) d'isolation anticorrosive des tubes ( 101, 102 ) métalliques ;
- on enlève le moule ( 6 ) cylindrique après la solidification de la résine ( 10 ) ;
**caractérisé en ce qu'**il comprend, avant le stade de mise en position, un stade de fixation à l'intérieur du moule ( 6 ) de demi-recouvrements ou de moules ( 307, 308 ) préformés en matériau isolant du point de vue thermique, chaque couche ( 201, 202 ) d'isolation anticorrosive de chaque canalisation ( 1, 2 ) étant isolée partiellement par au moins une couche ( 301, 302 ) de matériau isolant thermiquement et ayant une couche ( 401, 402 ) relativement imperméable de protection mécanique.

2. Procédé d'isolation suivant la revendication 1, **caractérisé en ce que** le moule ( 6 ) comprend au moins un trou ( 106 ) de coulée et est composé de deux hémi-coquilles ( 7, 8 ) de préférence métalliques, isolées intérieurement par un matériau non adhésif, tel que du Téflon ou autre.

3. Procédé d'isolation suivant les revendications 1 et 2, **caractérisé en ce que** le moule ( 6 ) de préférence métallique est construit de manière à réaliser, après assemblage autour du joint ( 3 ), un manchon à laisser en place après la coulée de la résine ( 10 ).

4. Procédé d'isolation suivant la revendication 1, **caractérisé en ce que**, dans le stade de mise en position du moule ( 6 ), les demi-recouvrements ( 307, 308 ) en matériau isolant thermiquement sont entourés d'un espace ( 9' ) creux et, dans le stade venant ensuite de coulée, sont encapsulés par la résine ( 10 ) coulée dans l'espace ( 9' ) creux.

5. Procédé d'isolation suivant la revendication 1, comprenant, en outre, un stade de fixation de demi-recouvrements ( 107, 108 ) d'un agglomérat de grande masse spécifique à l'intérieur du moule ( 6 ), chaque couche ( 201, 202 ) d'isolation anticorrosive de chaque canalisation ( 1, 2 ) étant entourée partiellement d'au moins une couche ( 501, 502 ) d'agglomérat de grande masse spécifique.

6. Procédé d'isolation suivant la revendication 5, **caractérisé en ce qu'**un demi-recouvrement ( 207, 208 ) de matériau isolant thermiquement est fixé à chaque demi-recouvrement ( 107, 108 ) d'agglomérat de grande masse spécifique, chaque couche ( 201, 202 ) d'isolation anticorrosive de chaque canalisation ( 1, 2 ) étant entourée en partie par au moins une couche ( 301, 302 ) de matériau isolant thermiquement munie d'une couche ( 401, 402 ) relativement imperméable de protection mécanique isolée partiellement par au moins une couche ( 501, 502 ) d'agglomérat de grande masse spécifique.

7. Procédé d'isolation suivant la revendication 5, **caractérisé en ce que** les demi-recouvrements ( 107, 108 ) d'agglomérat de grand poids spécifique sont en béton dérivé de tous types de ciments ou de matériaux inertes, éventuellement armés ou renforcés.

8. Procédé d'isolation suivant la revendication 1, **caractérisé en ce que** les demi-recouvrements ( 107, 108 ) d'agglomérat de grand poids spécifique comprennent des dispositifs d'accrochage et de couplage entre eux, les dispositifs étant capables de maintenir les demi-recouvrements ( 107, 108 ) en place après le stade de mise en position du moule ( 6 ).

9. Procédé d'isolation suivant la revendication 6, **caractérisé en ce que** les demi-recouvrements ( 307, 308, 207, 208 ) de matériau isolant thermiquement sont composés de résines thermodurcissables expansées, telles que de polyuréthane, de polyisocyanate, de polyurée, de polyester ou analogue.

10. Procédé d'isolation suivant la revendication 6, **caractérisé en ce que** les demi-recouvrements ( 307, 308, 207, 208 ) de matériau isolant thermiquement sont composés de résines thermoplastiques expansées, telles que de polystyrène, de polyéthylène, de polypropylène, de PVC et analogue.

11. Procédé d'isolation suivant la revendication 6, **caractérisé en ce que** les demi-recouvrements ( 307, 308, 207, 208 ) de matériau isolant thermiquement sont composés de matière minérale, telle que de laine de verre, de silicate de calcium, de verre cellulaire ou analogue.

12. Procédé d'isolation suivant la revendication 6, **caractérisé en ce que** les demi-recouvrements ( 307, 308, 207, 208 ) de matériau isolant thermiquement sont composés de matériaux isolants expansés à cellule ouverte en feuilles, en granulés ou sous forme de poudre introduits dans des récipients appropriés équipés d'un joint étanche et mis sous vide.

13. Procédé d'isolation suivant la revendication 1, **caractérisé en ce que** la résine ( 10 ) de scellement pour remplir l'espace ( 9, 9' ) creux est choisie parmi les résines thermodurcissables, telles que les résines de polyuréthane, les résines de polyurée, les résines de époxy, les résines de polyester, les résines de polyamide, les résines polycyclopentadiéniques ou analogues ; les résines modifiées par du bitume, du goudron de charbon ou autres ; les résines thermoplastiques éventuellement modifiées par du bitume, munies éventuellement de charges et éventuellement munies d'additif avec des agents favorisant l'adhérence ou autres.

14. Procédé d'isolation suivant la revendication 1, **caractérisé en ce qu'**il comprend, avant le premier stade de mise en position et, dans le cas de canalisations ( 1, 2 ) isolées par des résines de polyoléfine, les stades suivants de traitement de surfaces des couches ( 201, 202 ) de matériau anticorrosion et des surfaces ( 301 à 302, 401 à 402 ) de matière de polyoléfine appliquée éventuellement en tant que matière isolante thermiquement; abrasion mécanique de ces surfaces ; application d'une couche primaire appropriée sur ces surfaces ; traitement de ces surfaces par effet couronne ; et traitement de ces surfaces par flashing.

15. Procédé d'isolation suivant la revendication 6, **caractérisé en ce qu'**il comprend, avant le premier stade de mise en position, et dans le cas de canalisation ( 1, 2 ) isolées par des résines de polyoléfine, l'application sur les surfaces des couches ( 201, 202 ) d'un matériau anticorrosif et sur les surfaces ( 301 à 302, 401 à 402 ) de la matière de polyoléfine appliquée éventuellement en tant que matière isolante thermiquement, pour le prolongement souhaité, d'une première couche de copolymère de polyéthylène ou de polypropylène assujetti de manière appropriée, et d'une deuxième couche de résine époxy, de résine de polyuréthane, de résine de polyurée ou autre, capable de créer une surface de résine polaire sur la première couche de copolymère.

16. Procédé d'isolation suivant la revendication 15, **caractérisé en ce que** la première couche de copolymère se présente soi-même sous la forme d'une pellicule ou d'une gaine et est portée au point de fusion, ensemble avec la surface de la couche ( 201, 202 ) de matériau anticorrosif sur laquelle un matériau anticorrosif est appliqué, et les surfaces ( 301 à 302, 401 à 402 ) de matière de la polyoléfine appliquée éventuellement comme matériau isolant thermiquement, en utilisant des rayons infrarouges, de l'air chaud, des courroies de chauffage ou autres, sous la forme d'un matériau pulvérulent par un chalumeau ou sous la forme d'un liquide visqueux.

17. Procédé d'isolation suivant la revendication 15, **caractérisé en ce que** l'application de la deuxième couche de résine sur le copolymère assujetti porté au point de fusion est effectuée avec du matériau sous forme pulvérulente, liquide ou pâteuse.

18. Procédé d'isolation suivant la revendication 15, **caractérisé en ce qu'**un film ou une gaine de copolymère déjà couplé à la résine est appliqué sur la couche ( 201, 202 ) de matériau anticorrosif et sur les surfaces ( 301 à 302, 401 à 402 ) en utilisant des opérations d'extrusion de polymère greffé approprié et en répartissant la résine sur le matériau extrudé ainsi obtenu ou sur le matériau co-extrudé du polymère greffé et de la résine.
